# EUROPEAN PATENT APPLICATION

(11) **EP 3 300 386 A1**
(43) Date of publication of application: **28.03.2018**
(21) Application number: 15892695.6
(22) Date of filing: 17.12.2015
(51) Int. Cl.: H04R 1/10, G04G 9/00, G04G 17/08

(54) **BLUETOOTH HEADSET AND WATCH INCLUDING SAME**

(30) Priority: 19.05.2015 KR 20150069640
(71) Applicant: Oh, Young Gwun, Pyeongtaek-si, Gyeonggi-do 17817 (KR)
(72) Inventor: Oh, Young Gwun, Pyeongtaek-si, Gyeonggi-do 17817 (KR)
(74) Representative: Heyerhoff Geiger & Partner Patentanwälte PartGmbB
(86) International application number: PCT/KR2015/013892
(87) International publication number: WO 2016/186284

(57) **Abstract**

The present invention relates to a Bluetooth headset, which is an auxiliary communication terminal, and a watch that includes the same. More specifically, the present invention relates to a wireless communication headset assembly using a bezel constituting the outer peripheral portion of a watch and a watch equipped with the headset assembly. The present invention is efficient, especially, in a watch type wearable electronic device, such as a smart watch. The watch, according to the present invention, comprises: a watch body having a display unit on the top thereof and a mounting portion formed on the outer periphery of the display unit; and a Bluetooth headset that has a shape corresponding to the outer periphery of the display unit and is mounted on the mounting portion to surround the display unit and detachably installed on the watch body to serve as the body case or bezel of the watch body, wherein the Bluetooth headset is a slave terminal of a master terminal and is equipped with a sound output device that outputs sound information received from the master terminal.

## Description

### [Technical Field]

The present invention relates to a Bluetooth headset which is an auxiliary communication terminal, and a wristwatch including the same, and more particularly, to a wireless communication headset assembly using a bezel constituting an edge of a wristwatch, and a wristwatch at which the headset assembly is installed.

### [Background Art]

The present invention relates to a Bluetooth headset, which is an auxiliary terminal, of a terminal having a Bluetooth function.

The Bluetooth communication technology as a representative short-range mobile wireless communication system is used in an apparatus and method for mutually transmitting data to various devices, such as a smartphone, a notebook, an MP3 player, and a printer, which are located mainly in a short range of about 10 meters in real time through a wireless link, and is widely used in a variety of devices since it enables low power consumption, manufacture in the form of a small-scale microchip, and low manufacturing costs.

A device equipped with Bluetooth includes a master terminal that transmits data, and a plurality of slave terminals that receives the transmitted data. Currently, smartphones and notebook computers are widely used as master terminals, and headsets, hands-frees, and a computer mouse are widely used as slave terminals.

In the case of headsets that are most widely used, in particular, a phone call can be conveniently made via a headset using a Bluetooth link without directly using a mobile phone to talk on the phone, and in modern times in which voice recognition has advanced, making a call or sending text messages is convenient due to no need to directly use a mobile phone.

However, these Bluetooth headsets are inconvenient to carry separately from a master terminal, and have a high risk of being lost or damaged during carrying. In addition, when a user puts on a Bluetooth headset even when not in use, it inconveniences the user and strains a user's body, and thus users are unlikely to use such a Bluetooth headset.

In addition, the present invention relates to a wristwatch, and more particularly, to a smartwatch. A wristwatch is a small clock worn on the wrist, and includes a watch body including a display part to display time and a body case to cover the display part, and a bracelet to fix the watch body to the wrist. In addition, the wristwatch may include a bezel as a design element to surround an edge of the display part.

In such an existing wristwatch, when a design element thereof needs to be changed, a wristwatch itself has to be separately purchased, and thus costs are high. In addition, a wristwatch is worn on the wrist of a user all the time, and thus, when the user moves carelessly, a body case of a watch body is easily damaged, resulting in deteriorated aesthetics thereof. In particular, in wearable electronic devices such as smartwatches, inner components may be damaged by external impact, and thus such devices need to be worn carefully to protect the devices.

### [Disclosure]

### [Technical Problem]

Therefore, the present invention has been made in view of the above problems, and it is one object of the present invention to provide a Bluetooth headset that has improved portability and improved convenience of use, has convenient wearability, and is able to maintain aesthetics of a watch due to a beautiful design. In particular, in terms of importance of the design of wristwatches acting as accessories, the prior art fails to consider aesthetics and convenience of use such as weight, display readability, and the like of a wristwatch, due to size limitation, a detachment method thereof, or the like. In contrast, the present invention provides a Bluetooth headset that is based on a bezel, which is a basic constituent of a wristwatch, and thus maintains aesthetics of a classic wristwatch and has improved convenience of use and improved portability.

It is another object of the present invention to provide a wristwatch that includes the Bluetooth headset, and thus an external appearance thereof may be protected from an ambient environment and a variety of designs may be realized using a single wristwatch.

Thus, the Bluetooth headset of the present invention may have higher portability and higher convenience of use than an existing Bluetooth headset, may have a reduced risk of being lost or damaged, and may maintain aesthetics of a watch.

### [Technical Solution]

The present invention provides a Bluetooth headset and a wristwatch including the same.

In accordance with one aspect of the present invention, provided is a wristwatch including: a watch body provided with a display part at an upper surface thereof and provided with a seating part at an outer edge of the display part; and a Bluetooth headset including a sound output device outputting sound information received from a master terminal, having a shape corresponding to the outer edge of the display part, surrounding the display part, seated on the seating part, and detachably installed at the watch body, thus acting as a body case or bezel of the watch body, the Bluetooth headset being a slave terminal of the master terminal.

In another embodiment, the seating part of the watch body has a shape corresponding to a bottom surface or inner side surface of the Bluetooth headset.

In another embodiment, the Bluetooth headset includes an earring tip constituting at least a portion of an inner side surface, an outer side surface, or a rear surface of a housing of the Bluetooth headset, separated from the housing of the Bluetooth headset, and being rotatable.

In another embodiment, the watch body and the Bluetooth headset are detachably coupled to each other by hook coupling or screw coupling.

In another embodiment, the Bluetooth headset includes one or more joint parts, wherein joint links constituting the one or more joint parts are movable while forming a predetermined angle therebetween.

In another embodiment, the Bluetooth headset is configured to surround only a portion of the display part, and is detachably installed at the watch body in vertical and horizontal directions.

In another embodiment, the watch body and the Bluetooth headset are detachably coupled to each other using a locking groove and a locking protrusion corresponding to the locking groove.

In another embodiment, the watch body is provided, at an outer side surface thereof, with outer coupling steps protruding therefrom and the Bluetooth headset is provided, at an inner side surface thereof, with inner coupling steps protruding therefrom, wherein the outer coupling steps and the inner coupling steps are alternately fastened with each other so that the watch body and the Bluetooth headset are detachably coupled to each other.

In another embodiment, the Bluetooth headset includes: an attachment/detachment detection sensor detecting attachment/detachment of the Bluetooth headset to/from the wristwatch body to perform an on/off function of the Bluetooth headset; and a sleep detection sensor detecting a state in which the Bluetooth headset is separated from the wristwatch body (not in use) to perform an off function.

In another embodiment, the wristwatch includes a battery and a charging terminal to supply electric power to be consumed by the Bluetooth headset when the Bluetooth headset is seated on the wristwatch, and the Bluetooth headset includes a charging module in cooperation with the wristwatch, and thus, when the Bluetooth headset is coupled to the wristwatch, the Bluetooth headset is charged with the electric power of the wristwatch.

In another embodiment, the Bluetooth headset further includes a housing dividable into plural portions, wherein the plural portions of the housing come close to and are spaced apart from each other by couplers connected therebetween.

### [Advantageous effects]

According to one of the aforementioned embodiments of the present invention, basic constituents of a wristwatch usually worn are used, and thus aesthetics thereof can be maintained, inconvenience in carrying a Bluetooth headset separately from a master device can be addressed, and a risk of being lost and damaged may be reduced due to such portable convenience.

The effects of the present invention are obviously achieved by constitutions of the invention regardless of whether or not they are recognized by the inventor(s). Thus, the aforementioned effects are merely several effects according to the invention and should not be construed as describing all effects recognized by the inventor(s) or actually present. The effects of the present invention should be additionally recognized by overall description of the specification, and unless specifically stated otherwise, effects that may be acknowledged by one of ordinary skill in the art to which the present invention pertains through the present specification should be construed as effects described in the present specification.

### [Description of Drawings]

FIG. 1 is a perspective view illustrating a Bluetooth headset 100 and a wristwatch 200 according to an embodiment of the present invention.
FIG. 2 is a front view illustrating an internal configuration of the Bluetooth headset 100 according to an embodiment of the present invention of FIG. 1.
FIGS. 3 and 4 are cross-sectional views of a coupling part for coupling between the Bluetooth headset 100 and the wristwatch 200 according to an embodiment of the present invention.
FIG. 5 is an exploded perspective view illustrating a Bluetooth headset 300 according to an embodiment of the present invention and a wristwatch 400 including the Bluetooth headset 300.
FIG. 6 is a front view illustrating a joint part 310 of the Bluetooth headset 300 according to an embodiment of the present invention of FIG. 5.
FIG. 7 is a perspective view illustrating an internal configuration of the joint part 310 of FIG. 6.
FIG. 8 is a front view illustrating a Bluetooth headset 500 and a wristwatch 600 according to another embodiment of the present invention, wherein a watch body 610 has a tetragonal shape.
FIG. 9 is a cross-sectional view illustrating a coupling part for coupling between the Bluetooth headset 500 and the wristwatch 600 according to another embodiment of the present invention of FIG. 8.
FIG. 10 is an exploded perspective view illustrating a Bluetooth headset 700 and a wristwatch 800 according to another embodiment of the present invention, wherein a housing 701 of the Bluetooth headset 700 entirely constitutes an edge of a display part 811 of the wristwatch 800.
FIG. 11 is a bottom view illustrating a rear surface of the Bluetooth headset 700 of another embodiment of the present invention of FIG. 10.
FIG. 12 is an exploded perspective view illustrating a case in which the length of a Bluetooth headset 1000 according to another embodiment of the present invention is adjusted.
FIG. 13 is an exploded perspective view illustrating a case in which a watch body has a tetragonal shape and the length of a Bluetooth headset 1100 according to another embodiment of the present invention is adjusted.
FIG. 14 is an exploded perspective view illustrating a case in which a display part 900 of a wristwatch and a Bluetooth headset are separately detached from the wristwatch, according to another embodiment of the present invention.
FIG. 15 is a use state view illustrating a state in which a Bluetooth headset according to an embodiment of the present invention is put on an ear of a wearer.

### [Best mode]

The terms or words used in the present specification and claims should not be construed as being limited to ordinary or dictionary meanings and should be construed as meanings and concepts consistent with the spirit of the present invention based on a principle that an inventor can appropriately define concepts of terms to explain the invention of the inventor in the best way.

Thus, explanation described in the present specification and configurations illustrated in the drawings are merely exemplary embodiments of the present invention and do not represent all technical spirits of the present invention, and thus it should be understood that various equivalents and modifications that may replace these embodiments can be made at the filing time of the present application.

Hereinafter, the present invention will be described in more detail with reference to the accompanying drawings. Terms such as "sensor," "module," and "part" used for elements in the following description are given or used interchangeably only considering ease of drafting the specification, and do not have meanings or roles distinguished from each other.

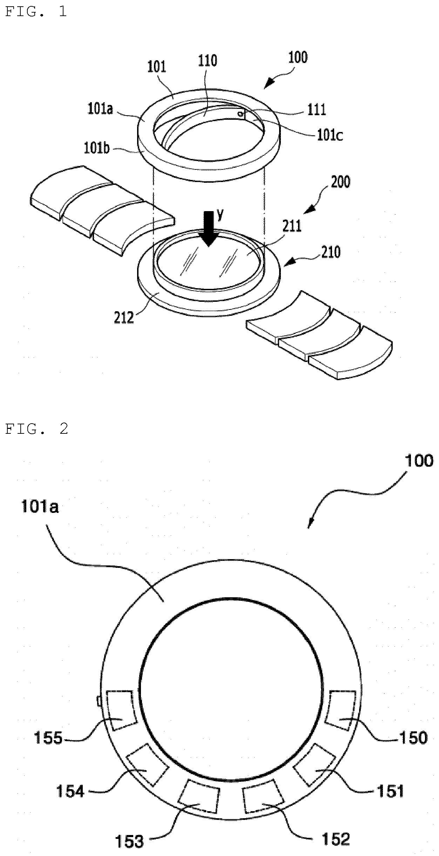

FIG. 1 is a perspective view illustrating a Bluetooth headset 100 and a wristwatch 200 according to an embodiment of the present invention. FIG. 2 is a front view illustrating an internal configuration of the Bluetooth headset 100 according to an embodiment of the present invention of FIG. 1.

Referring to FIG. 1, the present invention relates to the Bluetooth headset 100 which is a slave terminal of a master terminal having a Bluetooth function, and the Bluetooth headset 100 is detachably installed at the wristwatch 200.

The wristwatch 200 includes a watch body 210 which is a main element of a watch, and the watch body 210 is provided with a display part 211 at an upper surface thereof and is provided with a seating part 212 at an outer edge thereof. The display part 211 is a constitutional element that tells time or by which a usage state of the present invention can be identified, and may include an analog watch dial or a digital liquid crystal screen. The display part 211 also acts as an input unit when consisting of a touchscreen.

The display part 211 is provided, at the outer edge thereof, with the seating part 212 having a shape corresponding to the outer edge, surrounding the display part 211, and allowing the Bluetooth headset 100 to be seated thereon. The seating part 212 is a constitutional element allowing the Bluetooth headset 100 to be installed on and supported by the watch body 210, and contacts the Bluetooth headset 100 and thus generally has a shape corresponding to a bottom surface of the Bluetooth headset 100.

Although FIG. 1 illustrates that the seating part 212, on which the Bluetooth headset 100 is seated, contacts the display part 211, the seating part 212 may be spaced apart from the display part 211 by a predetermined distance. In one embodiment, the seating part 212 may be positioned on a side surface of the watch body 210.

The Bluetooth headset 100 according to an embodiment of the present invention may have a shape completely surrounding the outer edge of the display part 211. In this case, the Bluetooth headset 100 may be detachable in a Y direction (vertical direction) illustrated in FIG. 1.

The housing of the Bluetooth headset 100 is provided with an earring tip 110 at an inner side surface 101c thereof. The earring tip 110 has a circular arc shape, and thus may constitute at least a portion of the inner side surface 101c of the housing 101. The expression "constitute at least a portion of the inner side surface 101c of the housing 10" as used herein means that, when the earring tip 110 is not in a detached state, the inner side surface 101c of the housing 101 and an inner side surface of the earring tip 110 form the same surface. The earring tip 110 is separated by manipulation of a button (not shown) or the like and is rotatable about a rotary shaft 111. The Bluetooth headset 100 may be put on an ear of a wearer using the earring tip 110. Although FIG. 1 illustrates that the earring tip 110 constitutes at least a portion of the inner side surface 101c of the housing 101, the earring tip 110 may also constitute at least a portion of an outer side surface 101b or a rear surface of the housing 101 according to embodiments, in consideration of a user with big ears, a user wearing glasses, or the like.

The wristwatch 200 includes an embedded battery to supply electric power to be consumed by the Bluetooth headset 100 when the Bluetooth headset 100 is seated on the seating part 212, and a portion of the watch body 210 includes a charging terminal (not shown) to allow the battery to be supplied with electric power from the outside. The Bluetooth headset 100 includes a charging module in cooperation with the wristwatch 200, and thus, when the Bluetooth headset 100 is coupled to the wristwatch 200, the Bluetooth headset 100 is charged with electric power of the wristwatch 200. The charging module may be of an electrical contact type or a magnetic induction wireless charging type, but the present invention is not limited thereto.

Referring to FIG. 2, the Bluetooth headset 100 includes a sound output device 150 in the vicinity of the tragus (a projection situated in front of the concha) of a wearer to output sound information received from a master terminal of the Bluetooth headset 100. The sound output device 150 may be of a bone conduction type using vibration, not a speaker, but the present invention is not limited thereto.

In addition, the Bluetooth headset 100 further includes, therein, an attachment/detachment detection sensor 153 that detects attachment/detachment of the Bluetooth headset 100 to/from the wristwatch body 210 to automatically perform an on/off function of the Bluetooth headset and a sleep detection sensor 154. These configurations enable automatic recognition of a state in which the Bluetooth headset 100 is not in use, resulting in minimized power consumption, and may minimize operations needed for operation, resulting in maximized user convenience. Types of the attachment/detachment detection sensor 153 and the sleep detection sensor 154 are not physically and functionally limited. In one embodiment, in a case in which the Bluetooth headset 100 is used as a Bluetooth headset of a smartwatch, when a call comes to a smartwatch, the smartwatch makes a call to the Bluetooth headset to have function of the Bluetooth headset, and, when making a call is completed, the Bluetooth headset receives a call termination signal from the smartwatch and switches to a sleep mode. In another embodiment, when coupling between the Bluetooth headset 100 and the wristwatch 200 is released, and thus the charging module of the Bluetooth headset 100 is not supplied with electric power from the battery of the wristwatch 200, the Bluetooth headset 100 may receive a related signal from the wristwatch 200, or may detect this condition and, as a result, the sleep mode thereof is off and the function of the Bluetooth headset 100 is on.

The attachment/detachment detection sensor 153 and the sleep detection sensor 154 described above are located at positions forming weight balance that enables a wearer to feel comfortable when wearing the Bluetooth headset 100, corresponding to the sound output device 150 positioned in the vicinity of the tragus of a wearer.

In addition, the present invention may further include a data input unit 151 to receive an audio signal and a data conversion unit 152, and thus may itself be used as a hearing aid, or may be used as a hearing aid using an input device of a smartphone and a hearing aid application. In addition, the data input unit 151 not only receives an audio signal, but may also include one or more input devices such as a microphone or an operation detection sensor. In the case of the Bluetooth headset 100 in which both a camera and a microphone are embedded, input image data and sound data may be transmitted to the master terminal using short-range communication to be stored.

Similarly, sensors included in the Bluetooth headset 100 are not limited to the attachment/detachment detection sensor 153 and the sleep detection sensor 154, and the Bluetooth headset 100 may include one or more sensors to acquire wearer information or information on an ambient environment around the headset. For example, the Bluetooth headset 100 may include one or more of a proximity sensor, an illumination sensor, an acceleration sensor, a magnetic sensor, a G-sensor, a gyroscope sensor, a motion sensor, an RGB sensor, an infrared (IR) sensor, an ultrasonic sensor, an optical sensor, a microphone, a battery gauge, environment sensors (e.g., a barometer, a hygrometer, a thermometer, a radiation detection sensor, a heat detection sensor, a gas detection sensor, and the like), and chemical sensors (e.g., an electronic nose, a healthcare sensor, a biometric sensor, and the like), but the present invention is not limited to the above-listed sensors. Meanwhile, information detected by at least two of these sensors may be used in combination, and may also be transmitted to a master device such as a smartphone or a smartwatch.

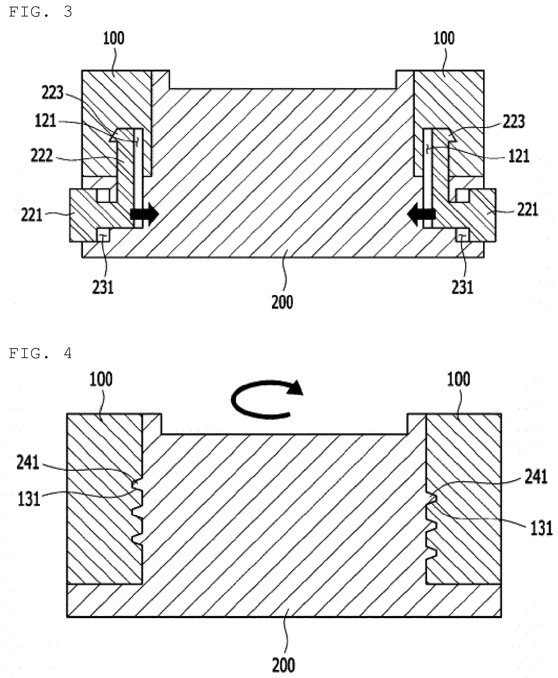

FIGS. 3 and 4 are cross-sectional views of a coupling part for coupling between the Bluetooth headset 100 and the wristwatch 200 according to an embodiment of the present invention. Hereinafter, a method of coupling the Bluetooth headset 100 according to an embodiment of the present invention to the wristwatch body 210 will be described with reference to the drawings.

The Bluetooth headset 100 of the present invention includes one or more locking units to perform attachment/detachment thereof to or from the wristwatch body, and the locking units may be provided in plural to achieve rigid coupling therebetween.

Referring to FIG. 3, the Bluetooth headset 100 may be hook-coupled to the wristwatch 200. For this, the housing 101 of the Bluetooth headset 100 has a hook accommodation groove 121 therein, and the watch body 210 may be provided therein with a hook 222 having a hook stopper 223. In addition, the watch body 210 is provided with an unlocking button 221 at an outer side surface thereof, and the unlocking button 221 may aid in releasing coupling between the Bluetooth headset 100 and the watch body 210. The unlocking button 221 extends from the hook 222, and, when the unlocking button 221 is pushed, the hook 222 moves back into the watch body 210 while the unlocking button 221 moves back into a button accommodation groove 231, and, accordingly, the Bluetooth headset 100 and the wristwatch 200 may be separated from each other. Although FIG. 3 illustrates that the unlocking button 221 and the hook 222 are positioned at the watch body 210, an unlocking button and a hook may also be positioned at the Bluetooth headset 100.

Referring to FIG. 4, the Bluetooth headset 100 may be screw-coupled to the wristwatch 200. For this, the housing 101 of the Bluetooth headset 100 may be provided with female threads 131 at an inner side surface thereof, and the watch body 210 may be provided with male threads 241 at an outer side surface thereof. The Bluetooth headset 100 and the watch body 210 may be coupled to each other by rotating the housing 101 of the Bluetooth headset 100 about the watch body 210.

Due to such a coupling method, the housing 101 of the Bluetooth headset 100 is conveniently detachable despite being made of a metal material.

In addition, the housing 101 constituting the external appearance of the Bluetooth headset 100 may be made of an elastic material such as rubber, urethane, silicone, thermoplastic polyurethane (TPU), or the like, and thus the Bluetooth headset 100 itself may be flexibly configured to be inserted into the wristwatch body 210.

The present invention relates to the wristwatch 200 including the above-described Bluetooth headset 100. In the present invention, the above-described Bluetooth headset 100 is detachably installed at the watch body 210, and thus acts as a body case or bezel of the watch body 210. In particular, the present invention is effective in wristwatch-type wearable electronic devices such as smartwatches. The present invention is characterized in terms of a coupling relationship between the wristwatch 200 and the Bluetooth headset 100 and a mutual cooperation system thereof when the wristwatch 200 is a smartwatch.

In addition, the Bluetooth headset 100 of the present invention includes a predetermined number of joint parts, and thus, when separated from the watch body 210, the Bluetooth headset 100 may be changed into a form easily installed on the ear of a wearer, and to more specifically explain this, a wristwatch 400 including a Bluetooth headset 300 will now be described in detail.

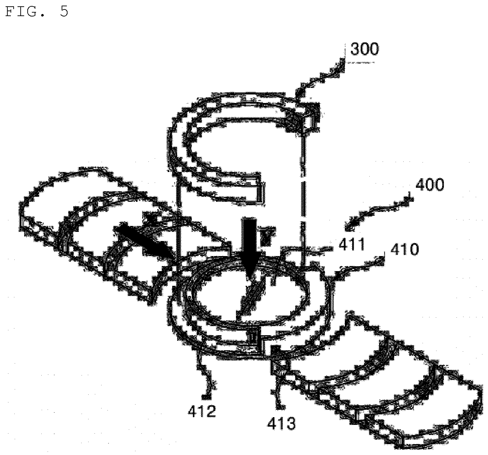

FIG. 5 is a perspective view illustrating a Bluetooth headset 300 according to an embodiment of the present invention and a wristwatch 400 including the Bluetooth headset 300. For convenience of explanation, hereinafter, only differences from the Bluetooth headset 100 and the wristwatch 200 described with reference to FIG. 1 will be described.

Referring to FIG. 5, a display part 411 formed on an upper surface of a watch body 410 is provided, at an outer edge thereof, with a seating part 412 having a shape corresponding to the outer edge, surrounding the display part 411, and allowing the Bluetooth headset 300 to be seated thereon.

In addition, the Bluetooth headset 300 according to an embodiment of the present invention may only partially surround the outer edge of the display part 411. In this case, the watch body 410 of the wristwatch 400 may have a larger space allowing a greater number of functional elements to be embedded therein. In addition, an attachment/detachment method of the Bluetooth headset 300 may be varied, and in one embodiment, the Bluetooth headset 300 may be attached or detached in a Y direction (vertical direction) illustrated in FIG. 5, or may be attached or detached by insertion in an X direction (horizontal direction).

In addition, the wristwatch 400 includes a charging terminal 413 at a portion at which the seating part 412 of the watch body 410 is not formed, to supply electric power to a battery from the outside.

In addition, the Bluetooth headset 300 according to an embodiment of the present invention may include one or more joint parts 310 that allow the Bluetooth headset 300 to be deformed into a shape conveniently worn on the ear of a wearer.

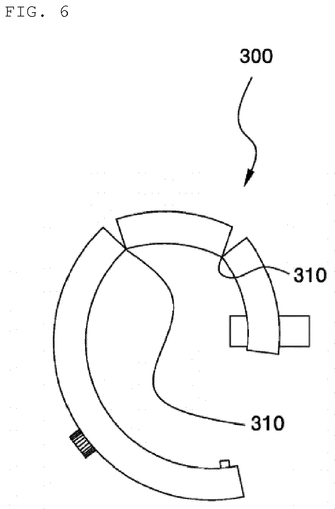

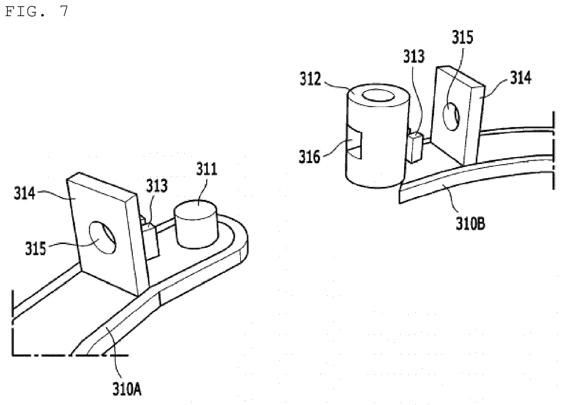

FIG. 6 is a front view illustrating the joint parts 310 of the Bluetooth headset 300 according to an embodiment of the present invention of FIG. 5. FIG. 7 is a perspective view illustrating an internal configuration of the joint parts 310 of FIG. 6.

Referring to FIG. 6, the Bluetooth headset 300 may include one or more joint parts 310. In addition, the joint parts 310 may be made of a shape memory material, and thus, when separated from the watch body 410, the joint part 310 is changed into an automatically memorized shape and, accordingly, may be conveniently worn on the ear of a wearer.

Referring to FIG. 7, plural joint links 310A and 310B are coupled to each other to form the joint part 310. Any one of the joint links, i.e., the joint link 310A, may have a locking protrusion 311, and the other thereof, i.e., the joint link 310B, may have a locking groove 312. The plural joint links 310A and 310B constituting the joint part 310 may move with respect to each other while forming a predetermined angle therebetween. The locking groove 312 has a space 316 to position a torsion spring (not shown), and each of the joint links 310A and 310B includes a seating groove 313 in which an arm of the torsion spring is seated. A partition wall 314 that separates the joint part 310 from another space is formed on an outer side of the seating groove 313 for waterproofing or the like. A through-hole 315 through which a wire passes is formed in the partition wall 314.

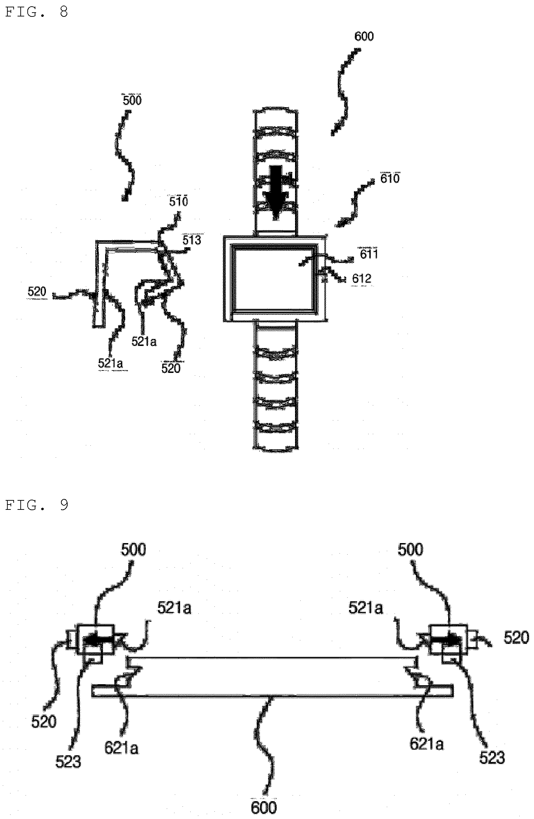

FIG. 8 is a front view illustrating a Bluetooth headset 500 and a wristwatch 600 according to another embodiment of the present invention, wherein a watch body 610 has a tetragonal shape. FIG. 9 is a cross-sectional view illustrating a coupling part for coupling between the Bluetooth headset 500 and the wristwatch 600 according to another embodiment of the present invention of FIG. 8. For convenience of explanation, hereinafter, only differences from the Bluetooth headset 300 and the wristwatch 400 described with reference to FIG. 5 will be described.

Referring to FIGS. 8 and 9, one or more locking units including a locking groove 621a formed at an outer edge of a display part 611 and a locking protrusion 521a formed at the Bluetooth headset 500 to correspond to the locking groove 621a are provided to perform an attachment/detachment function of a watch body 610 and the Bluetooth headset 500. Unlike what is illustrated in FIGS. 8 and 9, a locking protrusion may be formed on the outer edge of the display part 611, and a locking groove may be formed at the Bluetooth headset 500.

The above-described locking unit is positioned at a surface of an outer side of the Bluetooth headset 500, and may include an unlocking button 520 of the locking protrusion 521a, as a means for aiding in uncoupling the watch body 610 and the Bluetooth headset 500. When the unlocking button 520 is pushed, the locking protrusion 521a moves back into the Bluetooth headset 500 so that the Bluetooth headset 500 and the watch body 610 are separated from each other.

In addition, the locking unit may further include a protruding spring 523 at a surface of the Bluetooth headset 500 contacting a seating part 612 to protrude when the unlocking button 520 is pushed and thus help separation of the Bluetooth headset 500, thereby achieving convenience of use.

The above-described coupling members according to one embodiment of the present invention should not be construed as excluding other coupling members, and thus another coupling method will now be described as an example.

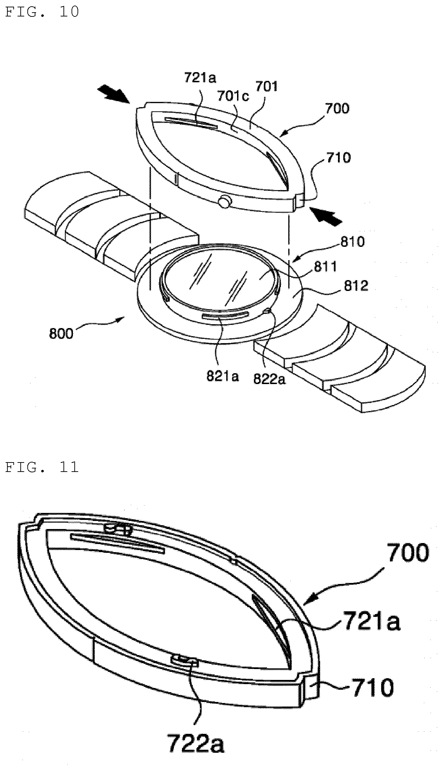

FIG. 10 is an exploded perspective view illustrating a Bluetooth headset 700 and a wristwatch 800 according to another embodiment of the present invention, wherein a housing 701 of the Bluetooth headset 700 entirely constitutes an edge of a display part 811 of the wristwatch 800. FIG. 11 is a bottom view illustrating a rear surface of the Bluetooth headset 700 of another embodiment of the present invention of FIG. 10. For convenience of explanation, hereinafter, only differences from the Bluetooth headset 300 and the wristwatch 400 described with reference to FIG. 5 will be described. A method of coupling the Bluetooth headset 700 and the wristwatch 800 of the present invention will be described as an embodiment with reference to the drawings.

Referring to FIGS. 10 and 11, inner coupling steps 721a protrude from an inner surface 701c of the housing 701 of the Bluetooth headset 700 and outer coupling steps 821a protrude from an outer edge of the display unit 811, and when force is applied from opposite sides to the joint part 710 of the Bluetooth headset 700 in a direction illustrated by arrows, the Bluetooth headset 700 is deformed into a circular ring shape corresponding to the edge of the watch, and the outer coupling steps 821a and the inner coupling steps 721a are alternately coupled to each other on an upper surface of the watch body 810 and then rotated to be fastened with each other. In addition, the Bluetooth headset 700 is provided with a plurality of stoppers 722a protruding at a surface thereof contacting a seating part 812 to be coupled with locking protrusions 822a formed at the seating part 812 of the watch body 810, thereby more rigidly coupling the Bluetooth headset 700 to the watch body 810.

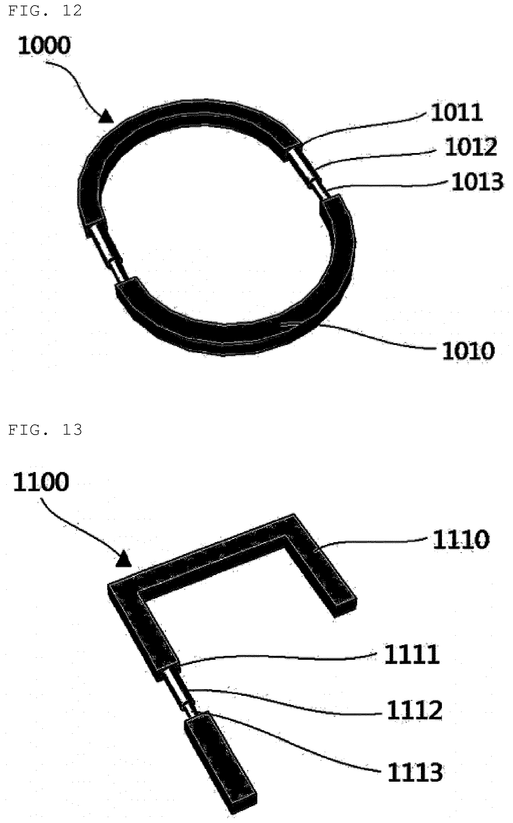

FIG. 12 is an exploded perspective view illustrating a case in which the length of a Bluetooth headset 1000 according to another embodiment of the present invention is adjusted. FIG. 13 is an exploded perspective view illustrating a case in which a watch body has a tetragonal shape and the length of a Bluetooth headset 1100 according to another embodiment of the present invention is adjusted. For convenience of explanation, hereinafter, only differences from the above-described Bluetooth headsets 100, 300, 500, and 700 will be described.

Referring to FIGS. 12, and 13, housings 1010 and 1110 of the Bluetooth headsets 1000 and 1100 are divided into plural portions, and the plural portions come close to and are spaced apart from each other by couplers connected therebetween. The couplers are accommodated in the housings 1010 and 1110 of the Bluetooth headsets 1000 and 1100, and thus are not exposed to the outside in normal times. These couplers include sleeves 1012 and 1112 and rods 1013 and 1113. The sleeves 1012 and 1112 are coupled to the rods 1013 and 1113 so that the rods 1013 and 1113 reciprocate. Sleeve accommodation holes 1011 and 1111 may be formed in portions of the housings 1010 and 1110, and the sleeves 1012 and 1112 may be accommodated in the sleeve accommodation holes 1011 and 1111. Through these constitutions, a user may appropriately adjust the lengths of the Bluetooth headsets 1000 and 1100 by pulling the housings 1010 and 1110 of the Bluetooth headsets 1000 and 1100 in opposite directions, and, when the joint parts 310 and 510 described with reference to FIGS. 6 to 8 are provided together, convenience of use may be further enhanced.

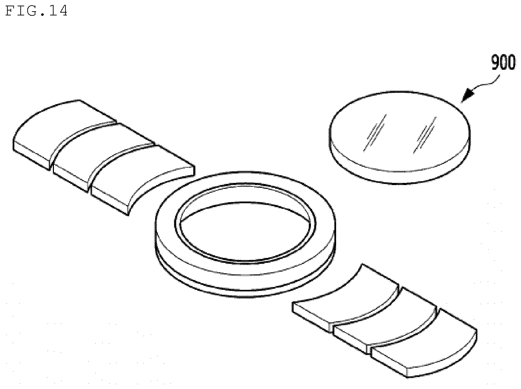

FIG. 14 is an exploded perspective view illustrating a case in which a display part 900 of a wristwatch and a Bluetooth headset are separately detached from the wristwatch, according to another embodiment of the present invention.

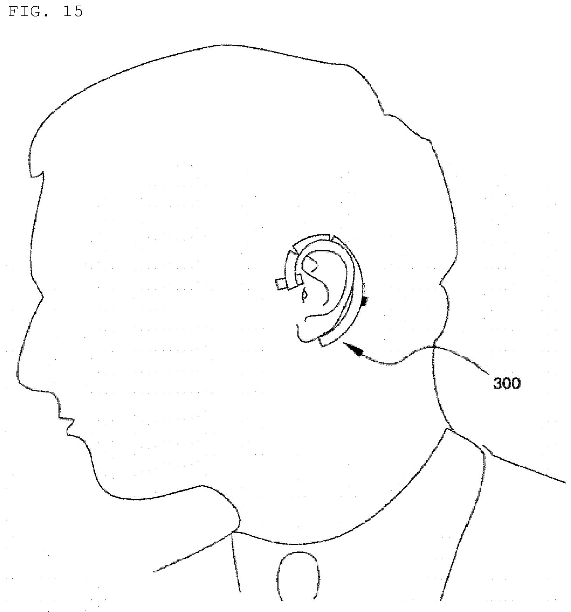

Lastly, FIG. 15 is a use state view illustrating a state in which a Bluetooth headset according to an embodiment of the present invention is worn on an ear of a wearer. Referring to FIG. 15, it can be confirmed how the Bluetooth headset 300 according to an embodiment of the present invention is applied.

Although the present invention has been described with reference to particular embodiments and drawings, the present invention is not limited thereby. In addition, it is obvious to one of ordinary skill in the art to which the present invention pertains that various changes and modifications may be made without departing from the spirit and scope of the invention and within the range equivalent to the scope of the following claims. Thus, the scope of the present invention should not be defined by the above-described embodiments and the drawings, and should be defined by the following claims and equivalents thereto.

## Claims

1. A wristwatch comprising:
a watch body provided with a display part at an upper surface thereof and provided with a seating part at an outer edge of the display part; and
a Bluetooth headset comprising a sound output device outputting sound information received from a master terminal, having a shape corresponding to the outer edge of the display part, surrounding the display part, seated on the seating part, and detachably installed at the watch body, thus acting as a body case or bezel of the watch body, the Bluetooth headset being a slave terminal of the master terminal.

2. The wristwatch according to claim 1, wherein the seating part of the watch body has a shape corresponding to a bottom surface or inner side surface of the Bluetooth headset.

3. The wristwatch according to claim 1, wherein the Bluetooth headset comprises an earring tip constituting at least a portion of an inner side surface, an outer side surface, or a rear surface of a housing of the Bluetooth headset, separated from the housing of the Bluetooth headset, and being rotatable.

4. The wristwatch according to claim 1, wherein the watch body and the Bluetooth headset are detachably coupled to each other by hook coupling or screw coupling.

5. The wristwatch according to claim 1, wherein the Bluetooth headset comprises one or more joint parts, wherein joint links constituting the one or more joint parts are movable while forming a predetermined angle therebetween.

6. The wristwatch according to claim 1, wherein the Bluetooth headset is configured to surround only a portion of the display part, and is detachably installed at the watch body in vertical and horizontal directions.

7. The wristwatch according to claim 1, wherein the watch body and the Bluetooth headset are detachably coupled to each other using a locking groove and a locking protrusion corresponding to the locking groove.

8. The wristwatch according to claim 1, wherein the watch body is provided, at an outer side surface thereof, with outer coupling steps protruding therefrom and the Bluetooth headset is provided, at an inner side surface thereof, with inner coupling steps protruding therefrom, wherein the outer coupling steps and the inner coupling steps are alternately fastened with each other so that the watch body and the Bluetooth headset are detachably coupled to each other.

9. The wristwatch according to claim 1, wherein the Bluetooth headset comprises:
an attachment/detachment detection sensor detecting attachment/detachment of the Bluetooth headset to/from the watch body to perform an on/off function of the Bluetooth headset; and
a sleep detection sensor detecting a state in which the Bluetooth headset is separated from the watch body (not in use) to perform an off function.

10. The wristwatch according to claim 1, wherein the wristwatch comprises a battery and a charging terminal to supply electric power to be consumed by the Bluetooth headset when the Bluetooth headset is seated on the wristwatch, and the Bluetooth headset comprises a charging module in cooperation with the wristwatch, and thus, when the Bluetooth headset is coupled to the wristwatch, the Bluetooth headset is charged with the electric power of the wristwatch.

11. The wristwatch according to claim 1, wherein the Bluetooth headset further comprises a housing dividable into plural portions, wherein the plural portions of the housing come close to and are spaced apart from each other by couplers connected therebetween.
